# FASCICULE DE BREVET EUROPEEN

(11) **EP 3 695 990 B1**
(45) Date de publication et mention de la délivrance du brevet: **06.10.2021**
(21) Numéro de dépôt: 20155061.3
(22) Date de dépôt: 03.02.2020
(51) Int. Cl.: B60C 25/00

(54) **EMBOUT DE GONFLEUR POUR PNEU AUTORÉPARABLE**
ENDHÜLSE EINER AUFPUMPVORRICHTUNG FÜR SELBSTREPARIERENDE REIFEN
INFLATOR TIP FOR SELF-REPAIRING TYRE

(30) Priorité: 14.02.2019 FR 1901473
(43) Date de publication de la demande: 19.08.2020
(73) Titulaire: RENAULT s.a.s., 92100 Boulogne-Billancourt (FR)
(72) Inventeur: COUAPEL, Philippe, 75011 Paris (FR); LAFORGE, Stéphane, 75014 Paris (FR); ZAMANIFARY, Anthony, 78000 Versailles (FR)

(56) Documents cités:
- EP-B1- 2 595 845
- AU-B2- 2009 282 577
- KR-U- 20000 018 452
- US-A- 1 857 703
- US-A- 1 930 182
- US-A1- 2018 141 396

## Description

L'invention concerne le domaine des roues, en particulier des roues de véhicule automobile.

Les véhicules automobiles comprennent des roues comportant chacune une jante et un pneu.

Un pneu doit être gonflé à une juste pression pour assurer parfaitement son rôle, c'est-à-dire assurer la tenue de route du véhicule automobile, son confort, et limiter la consommation de carburant. Cette opération est à faire tous les mois.

Une roue de véhicule automobile, connue de l'état de la technique, comprend une valve, généralement placée sur un bord extérieur de la jante de la roue. Son accès est parfois difficile à cause de l'enjoliveur.

Pour vérifier la pression de gonflage d'un pneu ou gonfler un pneu, il faut placer l'embout d'un gonfleur connu de l'état de la technique, à fond sur la valve. L'embout du gonfleur doit être bien placé et maintenu sur la valve. Il ne doit pas y avoir de fuite d'air. Le tuyau du gonfleur doit tenir tout seul. Pour gonfler ou dégonfler le pneu, il faut ajuster la pression à l'aide de boutons sur une borne de gonflage. Une fois la bonne pression indiquée par le manomètre de la borne de gonflage, l'embout du gonfleur doit être rapidement retiré.

Il est connu de l'état de la technique le pneu autoréparable en cas de crevaison. La technologie de ce pneu lui permet de combler automatiquement les trous créés par les aléas de la route. Par exemple, une gomme recouvre l'intérieur du pneu. Dès qu'une pointe perfore le pneu, cette gomme devient liquide et vient combler le trou, avant de se resolidifier. La perte de pression est infime et cette technologie permet même plusieurs crevaisons du pneu.

Selon l'état de la technique, un pneu autoréparable est monté sur une jante standard, comprenant une valve adaptée à l'embout d'un gonfleur de l'état de la technique, pour permettre l'ajustement de la pression de gonflage du pneu par une borne de gonflage. L'avantage de monter un pneu autoréparable sur un véhicule automobile est sa capacité à résister aux aléas de la route. Le document US 1 930 182 A décrit un embout simple de gonfleur pour pneu autoréparable.

L'invention propose un nouvel embout de gonfleur pour pneu autoréparable, visant à simplifier une roue munie dudit pneu autoréparable, en permettant la suppression de la valve de la jante. L'invention vise également à fiabiliser et simplifier l'ajustement de pression de gonflage d'un pneu par l'utilisation d'un tel embout de gonfleur.

L'invention porte sur un embout de gonfleur pour pneu autoréparable, comprenant un corps et une aiguille creuse destinée à être plantée dans une zone autoréparable d'un pneu, l'aiguille comprenant une partie saillante par rapport au corps, ladite partie saillante étant apte à perforer ladite zone autoréparable, le corps comportant des moyens de connexion à une pompe à gaz et comprenant un canal de communication fluidique entre les moyens de connexion et l'aiguille, de manière à permettre la circulation d'un gaz de gonflage dans l'aiguille pour gonfler ou dégonfler ledit pneu.

Selon un aspect de l'invention, la partie saillante de l'aiguille est droite.

Selon un aspect de l'invention, la partie saillante de l'aiguille est courbée.

Selon un aspect de l'invention, la partie saillante comprend une première extrémité libre et une deuxième extrémité localisée au niveau du corps, l'angle entre une tangente à la partie saillante en la première extrémité et une tangente à la partie saillante en la deuxième extrémité est compris entre 90 degrés et 135 degrés.

Selon l'invention, le corps comprend une base adaptée pour être en contact avec un pneu lorsque la partie saillante de l'aiguille est plantée dans une zone autoréparable dudit pneu, l'embout de gonfleur comprenant des moyens de réglage d'une hauteur de la partie saillante de l'aiguille par rapport à ladite base.

Selon un aspect de l'invention, la hauteur de la partie saillante est réglable entre une hauteur minimum de dix millimètres et une hauteur maximum de cent millimètres.

Selon un aspect de l'invention, le corps comprend un support et une tige, les moyens de réglage comprenant le support dans lequel la tige est montée mobile par rapport au support, le support étant apte à de déplacer par rapport à la tige selon un mouvement da translation, l'aiguille étant fixée à la tige.

Selon un aspect de l'invention, le support comprend un trou taraudé, la tige étant filetée et étant localisée au moins en partie dans le trou taraudé, un mouvement de rotation de la tige étant apte à faire translater le support par rapport à ladite tige.

Selon un aspect de l'invention, l'embout de gonfleur comprend un capteur apte à mesurer une épaisseur d'un pneu lorsque le corps de l'embout de gonfleur est disposé sur ledit pneu.

Selon un aspect de l'invention, la tige comprend une graduation permettant de contrôler la hauteur de la partie saillante de l'aiguille.

D'autres avantages et caractéristiques de l'invention apparaîtront à la lecture de la description et des dessins.
La figure 1 représente un embout de gonfleur selon l'invention, en place sur un pneu autoréparant de véhicule automobile, pour un ajustement de la pression de gonflage du pneu.
La figure 2a représente un embout de gonfleur en perspective et en coupe,
selon un premier mode de réalisation non compris dans l'invention revendiquée et selon une première variante.
La figure 2b représente un embout de gonfleur en perspective et en coupe, selon le premier mode de réalisation et selon une deuxième variante.
La figure 3a représente un embout de gonfleur en perspective et en coupe,
selon un deuxième mode de réalisation de l'invention revendiquée et selon la première variante.
La figure 3b représente un embout de gonfleur en perspective et en coupe, selon le deuxième mode de réalisation et selon la deuxième variante.
La figure 4a représente un embout de gonfleur en perspective et en coupe, selon un troisième mode de réalisation et selon la première variante.
La figure 4b représente un embout de gonfleur en perspective et en coupe, selon le troisième mode de réalisation et selon la deuxième variante.

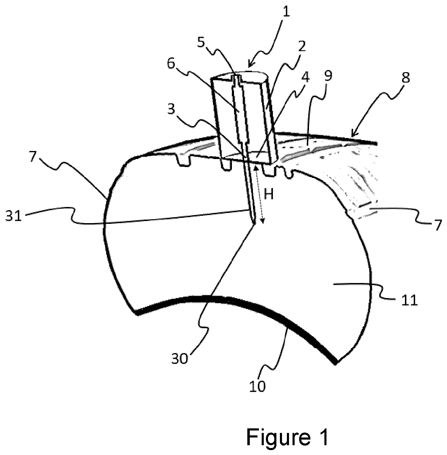

Sur la figure 1, un embout de gonfleur 1 selon l'invention est en place sur un pneu 8 autoréparable, pour un ajustement de la pression de gonflage du pneu 8.

Un pneu 8 autoréparable est un pneu comprenant au moins une zone autoréparable. Une zone autoréparable est une zone du pneu 8 dans laquelle un orifice traversant, généré par un outil perforateur, est apte à se refermer de lui-même après retrait de l'outil perforateur. Un outil perforateur est par exemple une aiguille.

Le pneu 8 est monté sur une jante 10, permettant de créer un espace 11 fermé et étanche à du gaz de gonflage, entre le pneu 8 et la jante 10, de manière à pouvoir gonfler ledit pneu 8 avec ledit gaz.

Un gaz de gonflage est par exemple de l'air ou un mélange d'air et d'azote.

L'embout de gonfleur 1 comprend un corps 2 et une aiguille 3 creuse apte à être parcourue en son sein par un gaz de gonflage.

L'aiguille 3 comprend une pointe 30 apte à perforer une zone autoréparable du pneu 8.

Le pneu 8 comprend une bande de roulage 9 destinée à être en contact avec la route, la bande de roulage 9 étant délimitée par deux flancs 7.

L'aiguille 3 est plantée dans la bande de roulage 9 du pneu 8.

Le corps 2 comprend une base 4 de laquelle dépasse une partie saillante 31 de l'aiguille 3. La partie saillante 31 est de hauteur H. La base 4 est en contact avec la bande de roulage 9 du pneu 8. L'aiguille 3 est enfoncée de la hauteur H dans le pneu 8, la base 4 faisant butée contre la bande de roulage 9.

La zone autoréparable d'un pneu 8 peut couvrir le pneu 8 dans son intégralité, être limitée à la bande de roulement 9 ou ne couvrir qu'une petite zone prédéterminée et avantageusement repérée sur le pneu 8. Dans ce dernier cas, la zone prédéterminée doit être plus étendue que le diamètre de l'aiguille 3 de l'embout de gonfleur 1.

Le corps 2 de l'embout de gonfleur 1 comporte en outre des moyens de connexion 5 à une pompe à gaz, et comprend un canal 6 de communication fluidique entre les moyens de connexion 5 et l'aiguille 3 creuse. Ainsi, il est possible de faire entrer ou sortir du gaz de l'espace 11 en connectant une pompe à gaz aux moyens de connexion 5 du gonfleur 1. Il est ainsi possible de gonfler ou dégonfler le pneu 8 pour ajuster la pression de gonflage dudit pneu 8.

Sur la figure 1, le pneu 8 autoréparable est un pneu de véhicule automobile. L'invention est applicable à tout pneu autoréparable, par exemple un pneu de moto, de scooter, de bicyclette, d'engin de chantier, de tracteur, de remorque, de poussette, de fauteuil roulant, de gyropode, de brouette, d'avion, de planeur, d'autogire, de camion, d'autocar, d'autobus, de tramway.

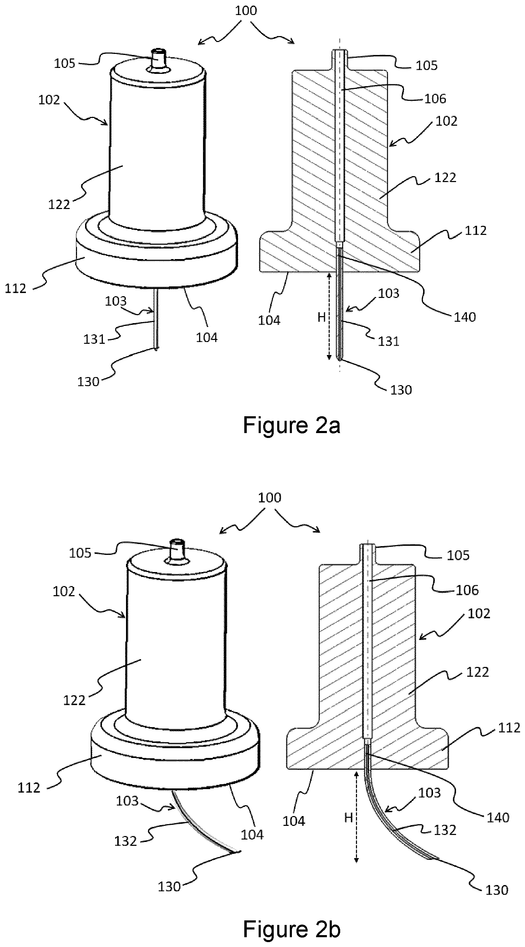

Les figures 2a et 2b illustrent un premier mode de réalisation non compris dans l'invention revendiquée destiné à faciliter la compréhension de l'invention.

Selon le premier mode de réalisation, l'embout de gonfleur 100 comprend un corps 102 et une aiguille 103 creuse apte à être traversée par un gaz de gonflage.

L'aiguille 103 comprend une pointe 130 apte à perforer une zone autoréparable d'un pneu 8.

Le corps 102 comprend une base 104 de laquelle dépasse une partie saillante 131, 132 de l'aiguille 103. La base 104 est apte à faire butée contre un pneu 8 et plus particulièrement contre une zone autoréparante d'un pneu 8. La partie saillante 131, 132 de l'aiguille dépasse de la base 104 d'une hauteur H par rapport à ladite base 104. Autrement dit, la distance entre la pointe 130 de l'aiguille 103 et la base 104, selon une normale par rapport à la base 104 est égale à la hauteur H.

Pour le maintien de l'aiguille 103 au corps 102, une partie non saillante 140 de l'aiguille 103 est localisée dans le corps. La partie non saillante 140 est fixée dans le corps 102 par exemple par vissage, par insertion en force, par surmoulage.

Le corps 102 comprend un socle 112 surmonté d'un tronc 122. Le socle 112 comprend la base 104. De préférence, le socle 112 est fait de matière avec le tronc 122, par exemple en plastique. Cependant, le socle 112 et le tronc 122 peuvent être deux pièces distinctes assemblées.

Sur les figures 2a et 2b, le socle 112 et le tronc 122 sont de forme sensiblement cylindrique, le socle 112 ayant un diamètre plus grand que le tronc 122. Cette forme n'est pas limitative, le socle 112 et le tronc 122 peuvent être de forme différente et distincte l'une de l'autre, par exemple parallélépipédique, tronconique ou quelconque et comprenant par exemple une forme adaptée à la préhension par une main ou un bras de robot.

Le corps 102 de l'embout de gonfleur 100 comporte des moyens de connexion 105 à une pompe à gaz.

Les moyens de connexion 105 sont localisés sur le tronc 122, de préférence sur une face du tronc 122 opposée et sensiblement parallèle à la base 104.

Les moyens de connexion 105 comprennent une protubérance, par exemple cylindrique, apte à être connectée à un embout de tuyau de pompe à gaz.

Le corps 102 du gonfleur 100 comprend un canal 106 de communication fluidique entre les moyens de connexion 105 et l'aiguille 103.

D'un côté, le canal 106 débouche vers l'extérieur par les moyens de connexion 105. De l'autre côté, le canal 106 est relié à l'aiguille 103 qui est creuse. Ainsi, un gaz de gonflage peut traverser l'embout de gonflage 100 depuis les moyens de connexion 105 jusqu'à la pointe 130 de l'aiguille 103 pour gonfler un pneu 8. Un gaz de gonflage peut traverser l'embout de gonflage 100 depuis la pointe 130 de l'aiguille 103 jusqu'aux moyens de connexion 105 pour dégonfler un pneu 8.

La hauteur H de la partie saillante 131 par rapport à la base 104 est fixe et n'est pas réglable dans ce mode de réalisation non compris dans l'invention revendiquée. La hauteur H de la partie saillante 131 est une valeur comprise entre 10 millimètres et 100 millimètres. Selon la hauteur H de la partie saillante 131, l'embout de gonfleur 100 associé est adapté à certaines références de pneu et pas à d'autres. Avantageusement, plusieurs références d'embout de gonfleur sont proposées, chacune associée à une hauteur H de partie saillante 131, chacune compatible avec une liste de références de pneu prédéterminée.

Selon une première variante illustrée sur la figure 2a, la partie saillante 131 de l'aiguille 103 est droite.

La partie saillante 131 de l'aiguille 103 est alignée avec la partie non saillante 140 associée et le canal 106.

Selon une deuxième variante illustrée sur la figure 2b, la partie saillante 132 de l'aiguille 103 est courbée.

La partie saillante 132 comprend une première extrémité libre et une deuxième extrémité localisée au niveau du corps. Avantageusement, l'angle entre une tangente à la partie saillante 132 en la première extrémité et une tangente à la partie saillante 132 en la deuxième extrémité est compris entre 90 degrés et 135 degrés.

La partie non saillante 140 de l'aiguille 103 peut être droite, alignée avec le canal 106.

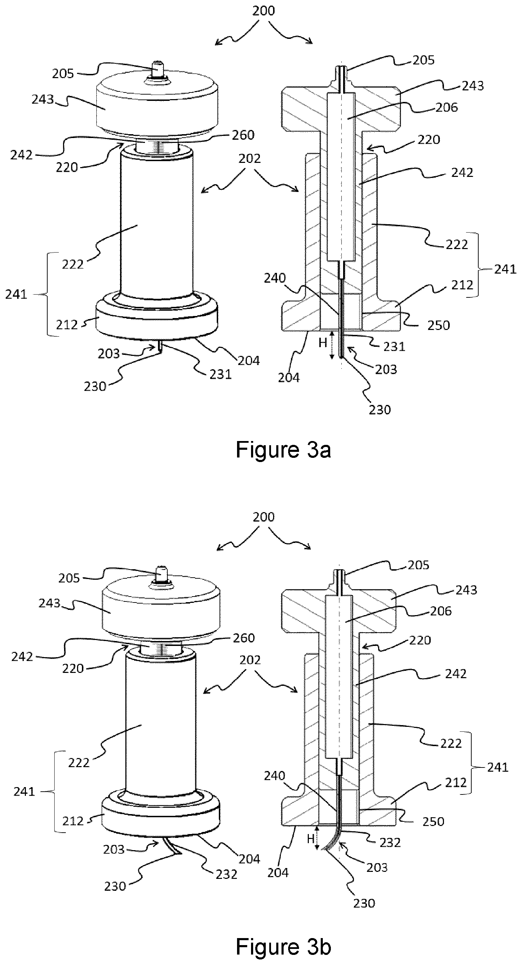

Les figures 3a et 3b illustrent un deuxième mode de réalisation de l'invention revendiquée dans lequel l'embout de gonflage comprend des moyens de réglage 220 de la hauteur H de la partie saillante de l'aiguille.

Selon le deuxième mode de réalisation, l'embout de gonfleur 200 comprend un corps 202 et une aiguille 203 creuse apte à être traversée par un gaz de gonflage.

L'aiguille 203 comprend une pointe 230 apte à perforer une zone autoréparable d'un pneu 8.

Le corps 202 comprend une base 204 de laquelle dépasse une partie saillante 231, 232 de l'aiguille 203. La base 204 est apte à faire butée contre un pneu 8 et plus particulièrement contre une zone autoréparante d'un pneu 8. La partie saillante 231, 232 de l'aiguille dépasse de la base 204 d'une hauteur H par rapport à ladite base 204.

Le corps 202 comprend un support 241 et une tige 242.

Le support 241 comprend un trou traversant 250 dans lequel la tige 242 est montée mobile par rapport au support 241.

Avantageusement le mouvement du support 241 par rapport à la tige 242 est un mouvement de translation.

Par exemple, le trou traversant 250 du support 241 est taraudé, et la tige 242 est filetée. Une rotation de la tige 241 provoque une translation du support 241.

Avantageusement, la tige 242 comprend une tête 243 formant une poignée pour actionner ladite tige 242.

L'aiguille 203 est fixée à la tige 242.

Les moyens de réglage 220 comprennent le support 241 dans lequel la tige 242 est montée mobile par rapport au support 241, le support 241 étant apte à de déplacer par rapport à la tige 242 selon un mouvement de translation, l'aiguille 203 étant fixée à la tige 242.

L'actionnement de la tige 242, notamment par une rotation de la tête 243, permet un réglage de la hauteur H de la partie saillante 231, 232 de l'aiguille 203.

Avantageusement la tête 243 forme une butée pour le support 241, limitant ainsi le réglage de la hauteur H de la partie saillante 231, 232 de l'aiguille 203 à une hauteur maximum.

Une partie non saillante 240 de l'aiguille 203 est fixée à la tige 242. Lorsque la tête 243 n'est pas en butée contre le support 241, une partie du trou 250 n'est pas comblé par la tige 242, une portion de la partie non saillante 240 de l'aiguille est localisée dans le trou 250.

Le support 241 comprend un socle 212 surmonté d'un tronc 222. Le socle 212 comprend la base 204. De préférence, le socle 212 est fait de matière avec le tronc 222, par exemple en plastique. Cependant, le socle 212 et le tronc 222 peuvent être deux pièces distinctes assemblées.

Sur les figures 3a et 3b, le socle 212 et le tronc 222 sont de forme sensiblement cylindrique, le socle 212 ayant un diamètre plus grand que le tronc 222. Cette forme n'est pas limitative, le socle 212 et le tronc 222 peuvent être de forme différente et distincte l'une de l'autre, par exemple parallélépipédique, tronconique ou quelconque et comprenant par exemple une forme adaptée à la préhension par une main ou un bras de robot.

Le corps 202 de l'embout de gonfleur 200 comporte des moyens de connexion 205 à une pompe à gaz.

Les moyens de connexion 205 sont localisés sur la tige 242, en particulier sur la tête 243 de la tige 242, de préférence sur une face de la tige 242, en particulier une face de la tête 243, opposée et sensiblement parallèle à la base 204.

Les moyens de connexion 205 comprennent une protubérance, par exemple cylindrique, apte à être connectée à un embout de tuyau de pompe à gaz.

La tige 242 du corps 202 du gonfleur 200 comprend un canal 206 de communication fluidique entre les moyens de connexion 205 et l'aiguille 203.

D'un côté, le canal 206 débouche vers l'extérieur par les moyens de connexion 205. De l'autre côté, le canal 206 est relié à l'aiguille 203 qui est creuse. Ainsi, un gaz de gonflage peut traverser l'embout de gonflage 200 depuis les moyens de connexion 205 jusqu'à la pointe 230 de l'aiguille 203 pour gonfler un pneu 8. Un gaz de gonflage peut traverser l'embout de gonflage 200 depuis la pointe 230 de l'aiguille 203 jusqu'aux moyens de connexion 205 pour dégonfler un pneu 8.

Dans ce deuxième mode de réalisation, la hauteur H de la partie saillante 231 par rapport à la base 204 est réglable entre une hauteur minimum égale à 10 millimètres et une hauteur maximum égale à 100 millimètres.

Pour régler la hauteur H de la partie saillante 231, on actionne la tête 243 de la tige 242 en maintenant fixe le support 241, par exemple avec une main.

Pour mettre en place un embout de gonflage 200 sur un pneu 8 : on positionne le corps 202 sur le pneu 8, la base 204 du support 241 devant être en contact avec le pneu 8. Puis, en maintenant fixe le support 241, on actionne la tige 242 avec la poignée 243 pour régler la hauteur H de l'aiguille 203 de manière à perforer l'épaisseur du pneu 8 pour que l'aiguille 203 atteigne l'espace 11 entre le pneu 8 et la jante 10 tel que représenté sur la figure 1.

Avantageusement, la tige 242 comprend une graduation 260 pour un réglage précis de la hauteur H. Par exemple, la graduation 260 indique la hauteur H de la partie saillante 231, 232, en millimètres, avec un pas de graduation de 5 millimètres. La graduation 260 est localisée sur la partie visible de la tige 242, à la jonction avec la tête 243.

Selon une première variante illustrée sur la figure 3a, la partie saillante 231 de l'aiguille 203 est droite.

La partie saillante 231 de l'aiguille 203 est alignée avec la partie non saillante 240 associée, et avec le canal 206.

Selon une deuxième variante illustrée sur la figure 3b, la partie saillante 232 de l'aiguille 203 est courbée.

La partie saillante 232 comprend une première extrémité libre et une deuxième extrémité localisée au niveau du corps. Avantageusement, l'angle entre une tangente à la partie saillante 232 en la première extrémité et une tangente à la partie saillante 232 en la deuxième extrémité est compris entre 90 degrés et 135 degrés.La partie non saillante 240 de l'aiguille 203 peut être droite, alignée avec le canal 106.

Le diamètre du trou 250 du support 241 est choisi de manière à permette de loger entièrement l'aiguille 20 courbée dans le trou 250, la hauteur H de la partie saillante 232 étant alors égale à zéro.

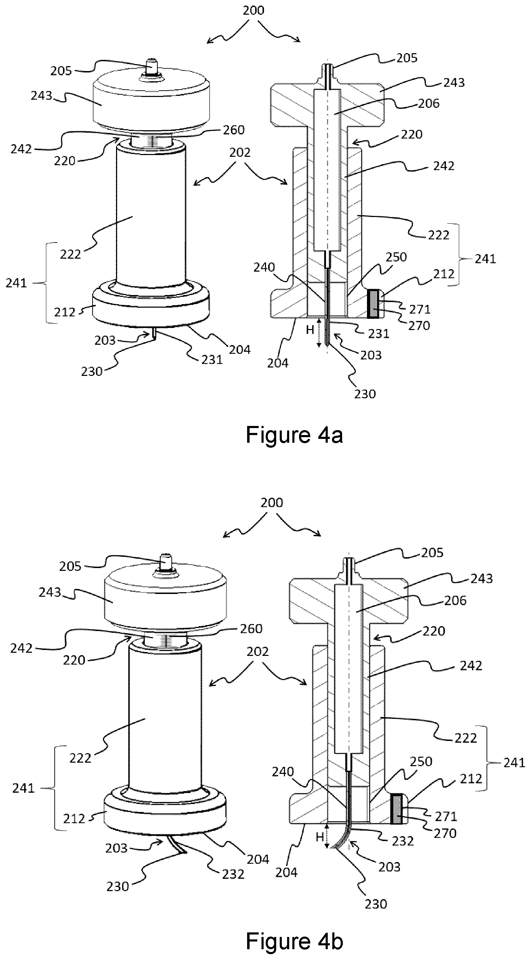

Les figures 4a et 4b illustrent un troisième mode de réalisation qui diffère du deuxième mode de réalisation uniquement en ce que l'embout de gonfleur comprend un capteur 270.

L'embout de gonfleur 200 comprend un logement 271 dans lequel est logé un capteur 270.

Le capteur 270 permet, lorsque l'embout de gonflage 200 est positionné sur un pneu 8, de mesurer l'épaisseur du pneu 8 pour un meilleur ajustement de la hauteur H de la partie saillante 231, 232 de l'aiguille 203.

Pour mettre en place un embout de gonflage 200 sur un pneu 8 : on positionne le corps 202 sur le pneu 8, la base 204 du support 241 devant être en contact avec le pneu 8. Ensuite, on lance une mesure de l'épaisseur du pneu 8, par le capteur 270. Puis, en maintenant fixe le support 241, on actionne la tige 242 avec la poignée 243 pour régler la hauteur H de l'aiguille 203, en fonction de la mesure faite par le capteur 270, de manière à perforer l'épaisseur du pneu 8 pour que l'aiguille 203 atteigne l'espace 11 entre le pneu 8 et la jante 10 tel que représenté sur la figure 1.

De manière optimale, on règle la hauteur H de la partie saillante 231, 232 de l'aiguille 203 à une valeur correspondant à l'épaisseur du pneu 8 mesurée par le capteur 270, à laquelle on ajoute une constante comprise entre 10 millimètres et 50 millimètres.

Le capteur 270 est par exemple un contrôleur d'épaisseur à ultrasons.

Le résultat de la mesure du capteur 270 peut être affichée sur un afficheur intégré à l'embout de gonfleur 200 ou bien sur un afficheur déporté.

La deuxième variante, quel que soit le mode de réalisation, dans laquelle la partie saillante 132, 232 de l'aiguille 103, 203 est courbée, permet d'éviter une interférence avec la jante 10 du pneu 8.

Les deuxième et troisième modes de réalisation, quelle que soit la variante, permettent de l'utilisation d'un même embout de gonfleur 200 pour plusieurs références de pneu 8, en particulier pour des pneus de différentes épaisseurs et comprenant différentes sculptures. Cela permet également l'utilisation d'un même embout de gonfleur 200 pour une utilisation en différentes zones autoréparables d'un pneu 8, par exemple aussi bien sur le flanc 7 que sur la bande de roulement 9, dans un sillon du pneu ou sur une sculpture.

Pour tous les modes de réalisation et quelle que soit la variante, le diamètre de l'aiguille doit être en adéquation avec les caractéristiques autoréparantes du pneu 8 à gonfler ou dégonfler. De manière standard, le diamètre de l'aiguille 3, 103, 203 est compris entre 1 millimètre et 10 millimètres.

L'aiguille 3, 103, 203 est creuse et comprend une cavité traversante de diamètre compris entre un demi millimètre et neuf millimètres, permettant la circulation d'un gaz de gonflage et un débit de gaz suffisant pour pouvoir gonfler un pneu 8 efficacement.

L'aiguille 3, 103, 203 est de préférence en métal, par exemple en acier inoxydable.

Le corps 2, 102, 202 de l'embout de gonfleur 1, 100, 200 peut être en plastique ou en métal ou composé de plusieurs matériaux.

## Revendications

1. Embout de gonfleur (1, 100, 200) pour pneu autoréparable, comprenant un corps (2, 102, 202) et une aiguille (3, 103, 203) creuse destinée à être plantée dans une zone autoréparable d'un pneu (8), l'aiguille (3, 103, 203) comprenant une partie saillante (31, 131, 132, 231, 232) par rapport au corps (2, 102, 202), ladite partie saillante (31, 131, 132, 231, 232) étant apte à perforer ladite zone autoréparable, le corps (2, 102, 202) comportant des moyens de connexion (5, 105, 205) à une pompe à gaz et comprenant un canal (6, 106, 206) de communication fluidique entre les moyens de connexion (5, 105, 205) et l'aiguille (3, 103, 203), de manière à permettre la circulation d'un gaz de gonflage dans l'aiguille (3, 103, 203) pour gonfler ou dégonfler ledit pneu (8), le corps (2, 102, 202) comprenant une base (204) adaptée pour être en contact avec un pneu (8) lorsque la partie saillante (231, 232) de l'aiguille (3, 103, 203) est plantée dans une zone autoréparable dudit pneu (8), **caractérisé en ce que** l'embout de gonfleur (1, 100, 200) comprend des moyens de réglage (220) d'une hauteur (H) de la partie saillante (231) de l'aiguille (3, 103, 203) par rapport à ladite base (204).

2. Embout de gonfleur (1, 100, 200) selon la revendication 1, la partie saillante (31, 131, 231) de l'aiguille (3, 103, 203) étant droite.

3. Embout de gonfleur (1, 100, 200) selon la revendication 1, la partie saillante (132, 232) de l'aiguille (103, 203) étant courbée.

4. Embout de gonfleur (1, 100, 200) selon la revendication précédente, la partie saillante (132, 232) comprenant une première extrémité libre et une deuxième extrémité localisée au niveau du corps, l'angle entre une tangente à la partie saillante (132, 232) en la première extrémité et une tangente à la partie saillante (132, 232) en la deuxième extrémité étant compris entre 90 degrés et 135 degrés.

5. Embout de gonfleur (1, 100, 200) selon l'une quelconque des revendications précédentes, la hauteur (H) de la partie saillante (231) étant réglable entre une hauteur minimum de dix millimètres et une hauteur maximum de cent millimètres.

6. Embout de gonfleur (1, 100, 200) selon l'une quelconque des revendications précédentes, le corps (202) comprenant un support (241) et une tige (242), les moyens de réglage (220) comprenant le support (241) dans lequel la tige (242) est montée mobile par rapport au support (241), le support (241) étant apte à de déplacer par rapport à la tige (242) selon un mouvement da translation, l'aiguille (203) étant fixée à la tige (242).

7. Embout de gonfleur (1, 100, 200) selon la revendication précédente, le support (241) comprenant un trou (250) taraudé, la tige (242) étant filetée et étant localisée au moins en partie dans le trou (250) taraudé, un mouvement de rotation de la tige (242) étant apte à faire translater le support (241) par rapport à ladite tige (242).

8. Embout de gonfleur (1, 100, 200) selon l'une quelconque des revendications précédentes, comprenant un capteur (270) apte à mesurer une épaisseur d'un pneu 8 lorsque le corps (202) de l'embout de gonfleur (200) est disposé sur ledit pneu (8).

9. Embout de gonfleur (1, 100, 200) selon l'une quelconque des revendications précédentes, la tige (242) comprenant une graduation (260) permettant de contrôler la hauteur (H) de la partie saillante (231) de l'aiguille (203).

## Patentansprüche

1. Aufblasstutzen (1, 100, 200) für einen selbstreparierenden Reifen, umfassend einen Körper (2, 102, 202) und eine Hohlnadel (3, 103, 203), die dazu bestimmt ist, in einen selbstreparierenden Bereich eines Reifens (8) eingebracht zu werden, wobei die Nadel (3, 103, 203) einen relativ zum Körper (2, 102, 202) vorspringenden Teil (31, 131, 132, 231, 232) umfasst, wobei der vorspringende Teil (31, 131, 132, 231, 232) geeignet ist, den selbstreparierenden Bereich zu perforieren, wobei der Körper (2, 102, 202) Mittel (5, 105, 205) zur Verbindung mit einer Gaspumpe aufweist und einen Kanal (6, 106, 206) zur Fluidverbindung zwischen den Verbindungsmitteln (5, 105, 205) und der Nadel (3, 103, 203) umfasst, um die Zirkulation eines Aufblasgases in der Nadel (3, 103, 203) zum Aufpumpen oder Ablassen des Reifens (8) zu ermöglichen, wobei der Körper (2, 102, 202) eine Basis (204) umfasst, die dazu ausgelegt ist, mit einem Reifen (8) in Kontakt zu stehen, wenn der vorspringende Teil (231, 232) der Nadel (3, 103, 203) in einen selbstreparierenden Bereich des Reifens (8) eingebracht ist, **dadurch gekennzeichnet, dass** der Aufblasstutzen (1, 100, 200) Mittel (220) zum Einstellen einer Höhe (H) des vorspringenden Teils (231) der Nadel (3, 103, 203) relativ zur Basis (204) umfasst.

2. Aufblasstutzen (1, 100, 200) nach Anspruch 1, wobei der vorspringende Teil (31, 131, 231) der Nadel (3, 103, 203) gerade ist.

3. Aufblasstutzen (1, 100, 200) nach Anspruch 1, wobei der vorspringende Teil (132, 232) der Nadel (103, 203) gekrümmt ist.

4. Aufblasstutzen (1, 100, 200) nach dem vorangehenden Anspruch, wobei der vorspringende Teil (132, 232) ein erstes freies Ende und ein zweites, am Körper befindliches Ende umfasst, wobei der Winkel zwischen einer Tangente am vorspringenden Teil (132, 232) am ersten Ende und einer Tangente am vorspringenden Teil (132, 232) am zweiten Ende zwischen 90 Grad und 135 Grad beträgt.

5. Aufblasstutzen (1, 100, 200) nach einem der vorangehenden Ansprüche, wobei die Höhe (H) des vorspringenden Teils (231) zwischen einer minimalen Höhe von zehn Millimetern und einer maximalen Höhe von hundert Millimetern einstellbar ist.

6. Aufblasstutzen (1, 100, 200) nach einem der vorangehenden Ansprüche, wobei der Körper (202) eine Halterung (241) und eine Stange (242) umfasst, wobei die Einstellmittel (220) die Halterung (241) umfassen, in der die Stange (242) relativ zur Halterung (241) beweglich montiert ist, wobei die Halterung (241) geeignet ist, relativ zur Stange (242) eine Translationsbewegung auszuführen, wobei die Nadel (203) an der Stange (242) befestigt ist.

7. Aufblasstutzen (1, 100, 200) nach dem vorangehenden Anspruch, wobei die Halterung (241) eine Gewindebohrung (250) umfasst, wobei die Stange (242) mit einem Gewinde versehen ist und sich zumindest teilweise in der Gewindebohrung (250) befindet, wobei eine Drehbewegung der Stange (242) geeignet ist, die Halterung (241) relativ zur Stange (242) translatorisch zu verschieben.

8. Aufblasstutzen (1, 100, 200) nach einem der vorangehenden Ansprüche, umfassend einen Sensor (270), der geeignet ist, eine Dicke eines Reifens (8) zu messen, wenn der Körper (202) des Aufblasstutzens (200) auf dem Reifen (8) angeordnet ist.

9. Aufblasstutzen (1, 100, 200) nach einem der vorangehenden Ansprüche, wobei die Stange (242) eine Skala (260) umfasst, die es ermöglicht, die Höhe (H) des vorspringenden Teils (231) der Nadel (203) zu steuern.

## Claims

1. Inflator tip (1, 100, 200) for a self-repairing tyre, comprising a body (2, 102, 202) and a hollow needle (3, 103, 203) intended to be planted in a self-repairing zone of a tyre (8), the needle (3, 103, 203) comprising a protruding part (31, 131, 132, 231, 232) with respect to the body (2, 102, 202), said protruding part (31, 131, 132, 231, 232) being able to perforate said self-repairing zone, the body (2, 102, 202) comprising connection means (5, 105, 205) for connection to a gas pump and comprising a fluidic communication channel (6, 106, 206) between the connection means (5, 105, 205) and the needle (3, 103, 203), so as to allow the circulation of an inflation gas in the needle (3, 103, 203) to inflate or deflate said tyre (8), the body (2, 102, 202) comprising a base (204) adapted to be in contact with a tyre (8) when the protruding part (231, 232) of the needle (3, 103, 203) is planted in a self-repairing zone of said tyre (8), **characterized in that** the inflator tip (1, 100, 200) comprises adjustment means (220) for adjusting a height (H) of the protruding part (231) of the needle (3, 103, 203) with respect to said base (204) .

2. Inflator tip (1, 100, 200) according to Claim 1, the protruding part (31, 131, 231) of the needle (3, 103, 203) being straight.

3. Inflator tip (1, 100, 200) according to Claim 1, the protruding part (132, 232) of the needle (103, 203) being curved.

4. Inflator tip (1, 100, 200) according to the preceding claim, the protruding part (132, 232) comprising a free first end and a second end located at the body, the angle between a tangent to the protruding part (132, 232) at the first end and a tangent to the protruding part (132, 232) at the second end being between 90 degrees and 135 degrees.

5. Inflator tip (1, 100, 200) according to any one of the preceding claims, the height (H) of the protruding part (231) being adjustable between a minimum height of ten millimetres and a maximum height of one hundred millimetres.

6. Inflator tip (1, 100, 200) according to any one of the preceding claims, the body (202) comprising a support (241) and a rod (242), the adjustment means (220) comprising the support (241) in which the rod (242) is mounted to be movable with respect to the support (241), the support (241) being able to move with respect to the rod (242) by a translational movement, the needle (203) being fixed to the rod (242) .

7. Inflator tip (1, 100, 200) according to the preceding claim, the support (241) comprising a tapped hole (250), the rod (242) being threaded and being located at least partly in the tapped hole (250), a rotational movement of the rod (242) being able to make the support (241) translate with respect to said rod (242).

8. Inflator tip (1, 100, 200) according to any one of the preceding claims, comprising a sensor (270) capable of measuring a thickness of a tyre 8 when the body (202) of the inflator tip (200) is positioned on said tyre (8).

9. Inflator tip (1, 100, 200) according to any one of the preceding claims, the rod (242) comprising a graduation (260) making it possible to control the height (H) of the protruding part (231) of the needle (203).
